# EUROPEAN PATENT APPLICATION

(11) **EP 4 803 421 A1**
(43) Date of publication of application: **09.09.2026**
(21) Application number: 26163380.4
(22) Date of filing: 09.03.2026
(51) Int. Cl.: B64D 27/33, B64D 33/08, F01D 15/10

(54) **AIR CIRCUIT FOR COOLING AIRCRAFT POWERPLANT ELECTRONICS**

(30) Priority: 07.03.2025 US 202519073745
(71) Applicant: RTX Corporation, Farmington, CT 06032 (US)
(72) Inventor: CLARK, Thomas E., Well, 04090 (US); YAZICI, Murat, Glastonbury, 06033 (US)
(74) Representative: Dehns

(57) **Abstract**

An assembly for an aircraft powerplant (20) includes a first electric machine (106A, 106B), a first controller (108A, 108B) and an air circuit (146). The first electric machine is configurable as a first electric motor and/or a first electric generator. The first controller is configured to control operation of the first electric machine and includes first electrical circuitry (122). The air circuit extends through the first controller and is configured to cool the first electrical circuitry using pressurized air.

## Description

### BACKGROUND OF THE INVENTION

### 1. Technical Field

This invention relates generally to an aircraft and, more particularly, to a cooling system for a powerplant of the aircraft.

### 2. Background Information

An aircraft powerplant includes various components which utilize fluid cooling during aircraft powerplant operation. Various fluid cooling systems and methods are known in the art. While these known cooling systems and methods have various benefits, there is still room in the art for improvement.

### SUMMARY OF THE INVENTION

According to an aspect of the present invention, an assembly is provided for an aircraft powerplant. This assembly includes a first electric machine, a first controller and an air circuit. The first electric machine is configurable as a first electric motor and/or a first electric generator. The first controller is configured to control operation of the first electric machine. The first controller includes first electrical circuitry. The air circuit extends through the first controller. The air circuit is configured to cool the first electrical circuitry using pressurized air.

According to another aspect of the present invention, another assembly is provided for an aircraft powerplant. This assembly includes a turbine engine, an electric device and an air circuit. The electric device is arranged with the turbine engine. The electric device includes a device housing and electrical circuitry disposed in an interior of the device housing. The air circuit is configured to receive bleed air from the turbine engine and direct the bleed air into the interior of the device housing to cool the electrical circuitry.

According to still another aspect of the present invention, another assembly is provided for an aircraft powerplant. This assembly includes a turbine engine, an electric device and a closed loop air circuit. The electric device is arranged with the turbine engine. The electric device includes a device housing and electrical circuitry disposed in an interior of the device housing. The closed loop air circuit is configured to cool the electrical circuitry using pressurized air.

According to still another aspect of the present invention, there is provided an aircraft powerplant comprising any of the above assemblies.

Each of the above aspects may contain one or more or all of the following features in any combination thereof.

The electric device may be configured as or otherwise include a controller.

The assembly may also include an electric machine operatively coupled to the turbine engine. The controller may be electrically coupled to the electric machine.

The assembly may also include an electric machine operatively coupled to the turbine engine. The controller may be configured to control operation of the electric machine.

The assembly may also include a turbine engine. The first electric machine may be operatively coupled to the turbine engine.

The assembly may also include a rotating structure comprising a bladed rotor. The first electric machine may be operatively coupled to the rotating structure.

The first controller may also include a first controller housing. The first electrical circuitry may be disposed in an interior of the first controller housing. The air circuit may extend through the interior of the first controller housing.

The first controller may also include a first controller housing. The air circuit may include a heat exchanger disposed in an interior of the first controller housing. The first electrical circuitry may be disposed in the interior of the first controller housing and in thermal communication with the heat exchanger.

The air circuit may be dedicated to cooling the first controller.

The assembly may also include a second controller comprising second electrical circuitry. The air circuit may also extend through the second controller. The air circuit may also be configured to cool the second electrical circuitry using the pressurized air.

The air circuit may be an open loop circuit.

The assembly may also include a compressor section, a combustor section, a turbine section and a flowpath. The flowpath may extend through the compressor section, the combustor section and the turbine section. The air circuit may be configured to receive the pressurized air from the flowpath.

The assembly may also include a compressor section, a combustor section, a turbine section and a flowpath. The flowpath may bypass the compressor section, the combustor section and/or the turbine section. The air circuit may be configured to receive the pressurized air from the flowpath.

The assembly may also include a housing structure comprising an internal compartment. The first controller may be disposed within the internal compartment. An airflow outlet from the air circuit may be fluidly coupled to the internal compartment.

The assembly may also include a housing structure comprising an internal compartment. The first electric machine may be disposed within the internal compartment. An airflow outlet from the air circuit may be fluidly coupled to the internal compartment.

The air circuit may include a flow regulator upstream of the first controller.

The air circuit may include a fluid separator upstream of the first controller.

The air circuit may include a filter upstream of the first controller.

The assembly may also include a heat exchanger. The air circuit may extend through heat exchanger upstream of the first controller.

The heat exchanger may be configured as or otherwise include an air-to-air heat exchanger.

The heat exchanger may be configured as or otherwise include a liquid-to air heat exchanger.

The assembly may also include a second air circuit extending through the heat exchanger. The heat exchanger may be configured to transfer heat energy from the pressurized air flowing within the air circuit into second pressurized air flowing through the second air circuit.

The assembly may also include a liquid working fluid circuit extending through the heat exchanger. The heat exchanger may be configured to transfer heat energy from the pressurized air flowing within the air circuit into a liquid working fluid flowing through the liquid working fluid circuit.

The air circuit may include a compressor upstream of the first controller.

The air circuit may be a closed loop circuit.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system with a ducted propulsor rotor.
FIG. 2 is a schematic illustration of a portion of the aircraft propulsion system at an electric machine system.
FIG. 3 is a schematic illustration of a portion of the aircraft propulsion system at a cooling system with an open loop air circuit.
FIG. 4 is a schematic illustration of a portion of the aircraft propulsion system at the cooling system with a closed loop air circuit.

### DETAILED DESCRIPTION

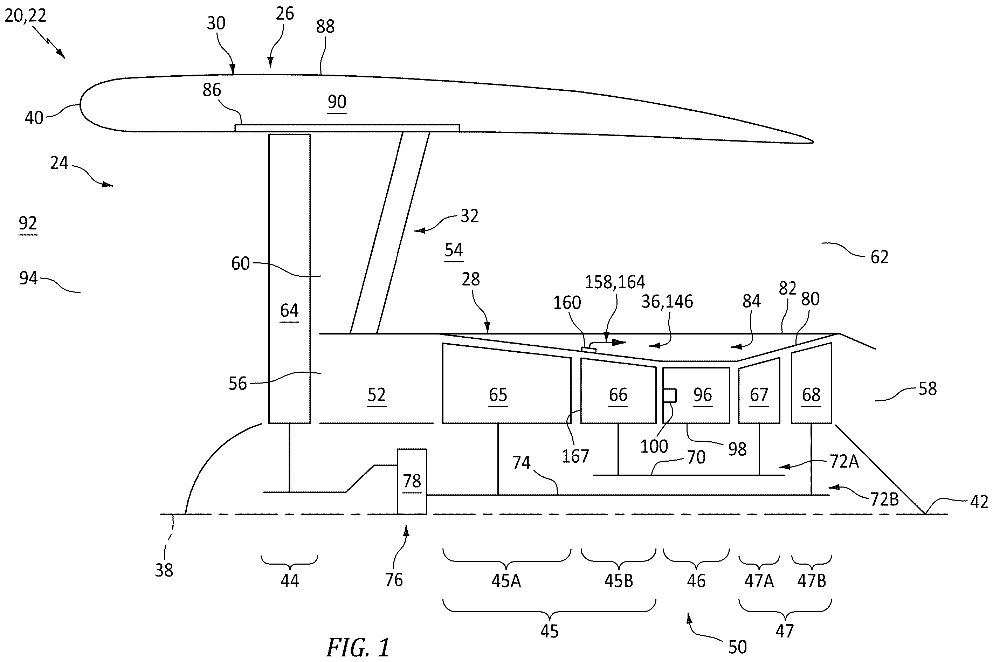

FIG. 1 illustrates a powerplant 20 for an aircraft. The aircraft may be an airplane, a drone (e.g., an unmanned aerial vehicle (UAV)) or any other manned or unmanned aerial vehicle or system. For ease of description, the aircraft powerplant 20 is described below as a propulsion system 22 for the aircraft and, more particularly, as a turbofan propulsion system. The aircraft powerplant 20 of the present invention, however, is not limited to such an exemplary propulsion system. The aircraft propulsion system 22, for example, may alternatively be configured as a turbojet propulsion system, a turboprop propulsion system, a turboshaft propulsion system, a propfan propulsion system, a pusher fan propulsion system, or any other type of ducted and/or open rotor propulsion system. Moreover, the aircraft powerplant 20 is not limited to propulsion system applications. The aircraft powerplant 20, for example, may also (or alternatively) be configured as an electrical power system for the aircraft; e.g., an auxiliary power unit (APU).

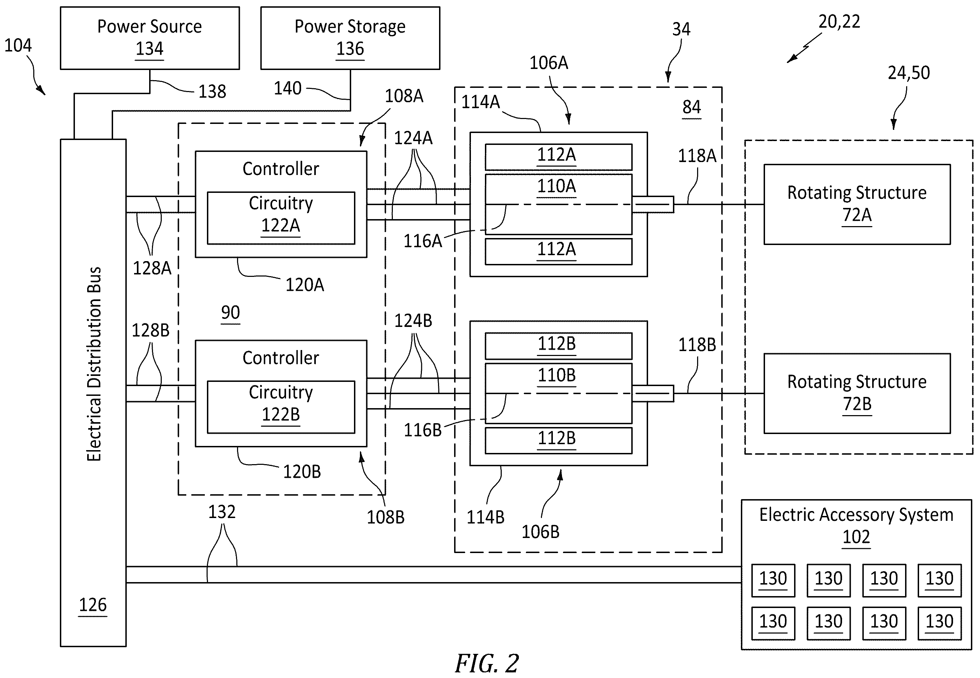

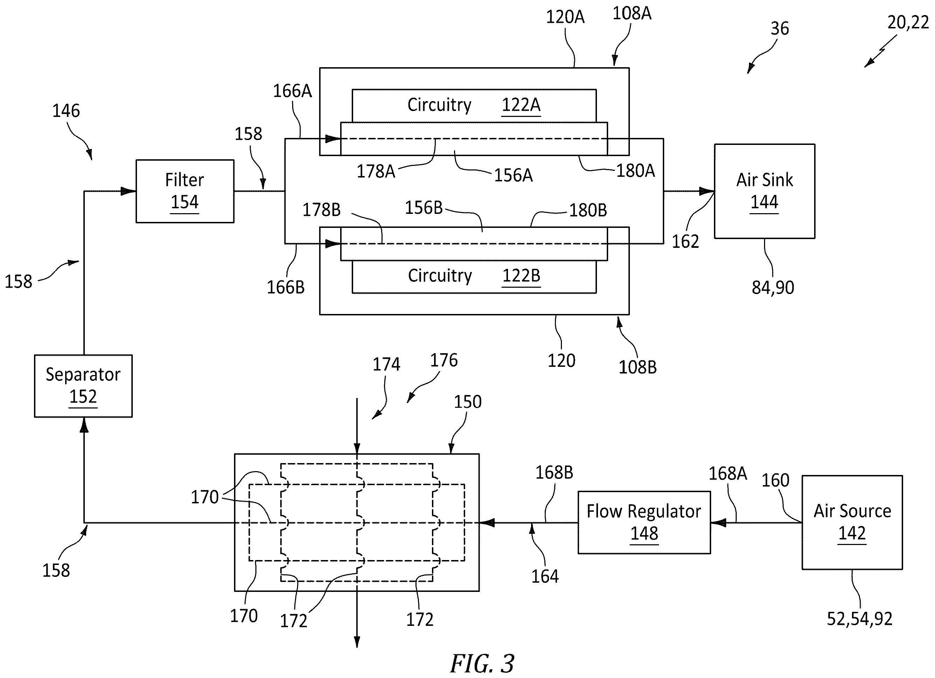

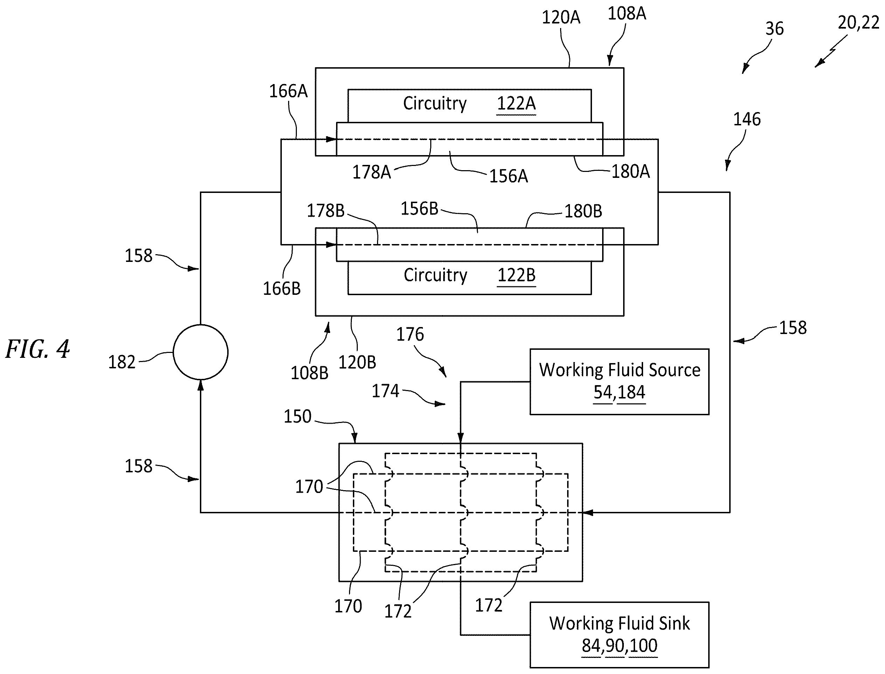

The aircraft propulsion system 22 includes a gas turbine engine 24 (e.g., a turbofan engine) housed within a stationary propulsion system housing 26, which propulsion system housing 26 of FIG. 1 includes an inner housing structure 28, an outer housing structure 30 and a guide vane structure 32 (e.g., a fan exit guide vane (FEGV) structure) extending radially between and connected to the inner housing structure 28 and the outer housing structure 30. The aircraft propulsion system 22 also includes an electric machine system 34 (see FIG. 2) and a cooling system 36 (see FIG. 3 or FIG. 4). The aircraft propulsion system 22 extends axially along an axis 38 between an axial upstream, forward end 40 of the aircraft propulsion system 22 and an axial downstream, aft end 42 of the aircraft propulsion system 22. Briefly, the propulsion system axis 38 may be a centerline axis of the aircraft propulsion system 22, the turbine engine 24 and/or one or more of its members. The propulsion system axis 38 may also or alternatively be a rotational axis for one or more members of the turbine engine 24.

The aircraft propulsion system 22 and its turbine engine 24 of FIG. 1 include a propulsor section 44 (e.g., a fan section), a compressor section 45, a combustor section 46 and a turbine section 47. The compressor section 45 of FIG. 1 includes a low pressure compressor (LPC) section 45A and a high pressure compressor (HPC) section 45B. The turbine section 47 of FIG. 1 includes a high pressure turbine (HPT) section 47A and a low pressure turbine (LPT) section 47B. At least (or only) the LPC section 45A, the HPC section 45B, the combustor section 46, the HPT section 47A and the LPT section 47B collectively form a core 50 (e.g., a gas generator) of the turbine engine 24. The aircraft propulsion system 22 and its turbine engine 24 of FIG. 1 also include a core flowpath 52 (e.g., an annular core flowpath) and a bypass flowpath 54 (e.g., an annular bypass flowpath). The core flowpath 52 extends sequentially through the LPC section 45A, the HPC section 45B, the combustor section 46, the HPT section 47A and the LPT section 47B from an airflow inlet 56 into the core flowpath 52 to a combustion products exhaust 58 out from the core flowpath 52. The bypass flowpath 54 extends through a bypass duct from an airflow inlet 60 into the bypass flowpath 54 to an airflow exhaust 62 from the bypass flowpath 54, where the bypass duct may be formed by the inner housing structure 28 and the outer housing structure 30. The bypass flowpath 54 and its bypass duct are configured to bypass (e.g., are disposed radially outboard of and extend along) the engine core 50 and the inner housing structure 28.

The propulsor section 44, the LPC section 45A, the HPC section 45B, the combustor section 46, the HPT section 47A and the LPT section 47B may be arranged sequentially along the propulsion system axis 38 within the propulsion system housing 26. The propulsor section 44 includes a bladed propulsor rotor 64; e.g., a fan rotor. The LPC section 45A includes a bladed low pressure compressor (LPC) rotor 65. The HPC section 45B includes a bladed high pressure compressor (HPC) rotor 66. The HPT section 47A includes a bladed high pressure turbine (HPT) rotor 67. The LPT section 47B includes a bladed low pressure turbine (LPT) rotor 68. Each of these engine rotors 64-68 includes a rotor base (e.g., a disk or a hub) and a plurality of rotor blades (e.g., airfoils, vanes, etc.). The rotor blades may be arranged into one or more stages axially along the respective engine rotor 64-68. The rotor blades in each stage are arranged and may be equispaced circumferentially around the respective rotor base in an annular array. Each of the rotor blades is connected to the respective rotor base. The rotor blades, for example, may be formed integral with or mechanically fastened, welded, brazed and/or otherwise attached to the respective rotor base. Each of the rotor blades projects spanwise (e.g., radially) out from the respective rotor base to a distal tip of the respective rotor blade.

The HPC rotor 66 is coupled to and rotatable with the HPT rotor 67. The HPC rotor 66 of FIG. 1, for example, is connected to the HPT rotor 67 through a high speed shaft 70. At least (or only) the HPC rotor 66, the HPT rotor 67 and the high speed shaft 70 collectively form a high speed rotating structure 72A; e.g., a high speed spool of the turbine engine 24 and its engine core 50. This high speed rotating structure 72A of FIG. 1 and its members 66, 67 and 70 are rotatable about the propulsion system axis 38. However, it is contemplated the high speed rotating structure 72A may alternatively be rotatable about another axis radially and/or angularly offset from the rotational axis of the propulsor rotor 64 and/or the centerline axis of the turbine engine 24.

The LPC rotor 65 is coupled to and rotatable with the LPT rotor 68. The LPC rotor 65 of FIG. 1, for example, is connected to the LPT rotor 68 through a low speed shaft 74. At least (or only) the LPC rotor 65, the LPT rotor 68 and the low speed shaft 74 collectively form a low speed rotating structure 72B; e.g., a low speed spool of the turbine engine 24 and its engine core 50. This low speed rotating structure 72B of FIG. 1 and its members 65, 68 and 74 are rotatable about the propulsion system axis 38. However, it is contemplated the low speed rotating structure 72B may alternatively be rotatable about another axis radially and/or angularly offset from the rotational axis of the propulsor rotor 64 and/or the centerline axis of the turbine engine 24.

The low speed rotating structure 72B is coupled to the propulsor rotor 64 through a propulsor drivetrain 76. The propulsor drivetrain 76 may be configured as a geared drivetrain, where a geartrain 78 (e.g., a transmission, a speed change device, an epicyclic geartrain, etc.) is disposed between and operatively couples the propulsor rotor 64 to the low speed rotating structure 72B and its LPT rotor 68. With this arrangement, the propulsor rotor 64 may rotate at a different (e.g., slower) rotational speed than the low speed rotating structure 72B and its LPT rotor 68. Here, the propulsor rotor 64 and the low speed rotating structure 72B may rotate in a common (the same) direction about the propulsion system axis 38 or in opposite directions about the propulsion system axis 38 depending, for example, upon the specific configuration of the geartrain 78. Alternatively, the propulsor drivetrain 76 may be configured as a direct-drive drivetrain, where the geartrain 78 is omitted. With such an arrangement, the propulsor rotor 64 rotates at a common (the same) rotational speed as the low speed rotating structure 72B and its LPT rotor 68.

The inner housing structure 28 of FIG. 1 includes an inner case 80 (e.g., a core case) for the turbine engine 24, an inner nacelle structure 82 (sometimes referred to as an inner fixed structure (IFS)) and an internal inner housing compartment 84 (e.g., an engine core compartment). The inner case 80 is disposed radially outboard of, extends axially along and may circumscribe one or more or all of the engine sections 45A-47B and the engine rotors 65-68. The inner case 80 may thereby house and provide a support structure for the respective engine sections 45A-47B and the engine rotors 65-68. The inner nacelle structure 82 is configured to provide an aerodynamic cover over the engine core 50 and its inner case 80. At least (or only) the inner housing structure 28 and its inner nacelle structure 82 may collectively form a radial inner peripheral boundary of the bypass flowpath 54. The inner housing compartment 84 of FIG. 1 is formed by and is disposed radially between the inner case 80 and an inner barrel of the inner nacelle structure 82.

The outer housing structure 30 of FIG. 1 includes an outer case 86 (e.g., a fan case) for the turbine engine 24, an outer nacelle structure 88 and an internal outer housing compartment 90. The outer case 86 is disposed radially outboard of, extends axially along and may circumscribe the propulsor section 44 and its propulsor rotor 64. The outer case 86 may thereby house and may be configured as a containment structure for the propulsor section 44 and its propulsor rotor 64. The outer nacelle structure 88 is configured to provide an aerodynamic cover over the outer case 86. At least (or only) the outer housing structure 30 and its outer nacelle structure 88 may collectively form a radial outer peripheral boundary of the bypass flowpath 54. The outer housing compartment 90 of FIG. 1 is formed by and is disposed radially between the outer case 86 and the outer nacelle structure 88; e.g., outer cowls of the outer nacelle structure 88.

During operation of the aircraft propulsion system 22 of FIG. 1, ambient air from an environment 92 external to the aircraft and its aircraft propulsion system 22 enters the aircraft propulsion system 22 and its turbine engine 24 through an airflow inlet 94. This air is propelled by the rotating propulsor rotor 64 in a downstream, aft direction towards the propulsion system aft end 42.

An outer stream of the air propelled by the rotating propulsor rotor 64 is directed into the bypass flowpath 54 through its bypass inlet 60, which air entering the bypass flowpath 54 may be referred to as "bypass air". The guide vane structure 32 conditions (e.g., straightens out, de-swirls, etc.) the flow of the bypass air within the bypass duct. This conditioned bypass air is subsequently directed out of the aircraft propulsion system 22 through the bypass exhaust 62 to provide forward thrust. The propulsion of the bypass air may account for a majority of the forward thrust generated by the aircraft propulsion system 22 and its turbine engine 24 of FIG. 1.

An inner stream of the air propelled by the rotating propulsor rotor 64 is directed into the core flowpath 52 through its core inlet 56, which air entering the core flowpath 52 may be referred to as "core air". This core air is compressed by the LPC rotor 65 and the HPC rotor 66 and is directed into a combustion chamber 96 (e.g., annular combustion chamber) of a combustor 98 (e.g., annular combustor) in the combustor section 46. Fuel is injected into the combustion chamber 96 by one or more fuel injectors 100 and mixed with the compressed core air to provide a fuel-air mixture. This fuel-air mixture is ignited and combustion products thereof flow through and sequentially drive rotation of the HPT rotor 67 and the LPT rotor 68. The rotation of the HPT rotor 67 and the LPT rotor 68 respectively drive rotation of the HPC rotor 66 and the LPC rotor 65 and, thus, compression of the air received from the core inlet 56. The rotation of the LPT rotor 68 also drives rotation of the propulsor rotor 64 through the propulsor drivetrain 76.

While the turbine engine 24 in FIG. 1 is shown with a particular two rotating structure arrangement, the present invention is not limited thereto. For example, the LPC rotor 65 may be omitted to configure the LPT rotor 68 as a power turbine (PT) rotor for the propulsor rotor 64. In another example, the turbine engine 24 may also include another rotating structure; e.g., an intermediate speed spool for the turbine engine 24 and its engine core 50.

Referring to FIG. 2, the electric machine system 34 is electrically coupled to an optional electric accessory system 102 and an electrical system 104 for the aircraft and its aircraft propulsion system 22. The electric machine system 34 of FIG. 2 includes one or more electric machines 106A and 106B (generally referred to as "106") and one or more electric machine (EM) controllers 108A and 108B (generally referred to as "108"). For ease of description, each electric machine 106 of FIG. 2 is described below as being electrically coupled to, controlled by and/or otherwise associated with a single, dedicated EM controller 108. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with the single electric machine.

Each electric machine 106A, 106B of FIG. 2 includes an electric machine rotor 110A, 110B (generally referred to as "110"), an electric machine stator 112A, 112B (generally referred to as "112") and an electric machine housing 114A, 114B (generally referred to as "114"); e.g., a case. The machine rotor 110A, 110B is rotatable about a rotational axis 116A, 116B (generally referred to as "116") of the respective machine rotor 110A, 110B, which electric machine (EM) axis 116 may also be a centerline axis of the respective electric machine 106. The machine stator 112 of FIG. 2 is radially outboard of and circumscribes the machine rotor 110. With this arrangement, each electric machine 106 is configured as a radial flux electric machine. The electric machines 106 of the present invention, however, are not limited to such an exemplary rotor-stator configuration nor to radial flux arrangements. The machine rotor 110, for example, may alternatively be radially outboard of and circumscribe the machine stator 112. In another example, the machine rotor 110 may be axially next to the machine stator 112 configuring the electric machine 106 as an axial flux electric machine. Referring again to FIG. 2, the machine rotor 110 and the machine stator 112 are at least partially or completely housed within an interior of the machine housing 114.

Each electric machine 106A, 106B may be operatively coupled to a respective one of the engine rotating structures 72A, 72B (generally referred to as "72"). Each machine rotor 110A, 110B of FIG. 2, for example, is mechanically coupled to and rotatable with the respective engine rotating structure 72A, 72B through an engine-electric machine drivetrain 118A, 118B (generally referred to as "118"). This engine-electric machine drivetrain 118 may be configured as or otherwise include a shaft, a tower shaft assembly, an accessory gearbox, an angle gearbox, and/or the like. For ease of description, each machine rotor 110 of FIG. 2 is described below as being coupled to and rotatable with a unique one of the engine rotating structures 72 of the turbine engine 24. However, it is contemplated multiple machine rotors may alternatively be coupled to and rotatable with a common engine rotating structure; e.g., 72A or 72B. It is also contemplated a single one of the machine rotors may be coupled to and rotatable with multiple engine rotating structures, directly or through another device such as a differential or a clutch system. In addition, while the electric machines 106 are described above as being coupled to the engine rotating structures 72, it is contemplated the machine rotor 110 of one or more of the electric machines 106 may also or alternatively be operatively coupled to another rotating device through the engine-electric machine drivetrain 118 such as, but not limited to, a pump rotor, an auxiliary compressor rotor, an actuator rotor, or the like.

Each electric machine 106 of FIG. 2 may be configurable as an electric motor and/or an electric generator; e.g., an electric motor-generator. For example, during a respective motor mode of operation, each electric machine 106 may operate as the electric motor to convert electricity received from the aircraft electrical system 104 into mechanical power. The machine stator 112, for example, may generate an electromagnetic field with the machine rotor 110 using a current of electricity received from the aircraft electrical system 104 through the respective EM controller 108. This electromagnetic field may drive rotation of the machine rotor 110. The machine rotor 110, in turn, may provide mechanical power to and drive rotation of the respective engine rotating structure 72 through the respective engine-electric machine drivetrain 118. This mechanical power may be provided to boost power or completely power the rotation of the respective engine rotating structure 72. By contrast, during a respective generator mode of operation, each electric machine 106 may operate as the electric generator to convert mechanical power received from the respective engine rotating structure 72 into electricity. Rotation of the machine rotor 110, for example, may be rotationally driven by rotation of the respective engine rotating structure 72 through the engine-electric machine drivetrain 118. The rotation of the machine rotor 110 may generate an electromagnetic field with the machine stator 112, and the machine stator 112 may convert energy from the electromagnetic field into electricity. The electric machine 106 may then provide a current of electricity to the aircraft electrical system 104 through the respective EM controller 108 for storage and/or further use. The electric machines 106 of the present invention, however, are not limited to such exemplary operation. For example, one or more of the electric machines 106 may each alternatively be configured as a dedicated electric generator; e.g., without the electric motor functionality. In another example, one or more of the electric machines 106 may each alternatively be configured as a dedicated electric motor; e.g., without the electric generator functionality.

Each EM controller 108A, 108B includes a controller housing 120A, 120B (generally referred to as "120") and internal controller circuitry 122A, 122B (generally referred to as "122"). The controller housing 120 may be configured as an enclosed case (e.g., a closed or sealed container) for the respective controller circuitry 122. The controller circuitry 122 is disposed within an interior of the respective controller housing 120; e.g., an internal chamber or other volume(s) within and enclosed by the controller housing 120. The controller circuitry 122 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 108A, 108B is electrically coupled to the respective electric machine 106A, 106B through one or more electric cables 124A, 124B (generally referred to as "124"); e.g., high voltage electric cables, power feeder cables, etc. More particularly, the controller circuitry 122 of each EM controller 108 is electrically coupled to the respective electric machine 106 and its machine stator 112 through the respective electric cables 124. Similarly, each EM controller 108A, 108B is electrically coupled to an electrical distribution bus 126 of the aircraft electrical system 104 through one or more electric cables 128A, 128B (generally referred to as "128"); e.g., high voltage electric cables, power feeder cables, etc. More particularly, the controller circuitry 122 of each EM controller 108 is electrically coupled to the aircraft electrical system 104 and its electrical distribution bus 126 through the respective electric cables 128.

Each EM controller 108 and its controller circuitry 122 are configured to control operation of the respective electric machine 106. For example, when operating as the electric motor, each EM controller 108 and its controller circuitry 122 are configured to regulate a flow of electricity from the aircraft electrical system 104 to the respective electric machine 106. This electricity flow regulation may include: (a) turning-on the flow of electricity from the aircraft electrical system 104 to the respective electric machine 106 (e.g., electrically coupling the respective electric machine 106 to the aircraft electrical system 104); (b) turning-off the flow of electricity from the aircraft electrical system 104 to the respective electric machine 106 (e.g., electrically decoupling the respective electric machine 106 from the aircraft electrical system 104); (c) moderating the flow of electricity from the aircraft electrical system 104 to the respective electric machine 106. Here, each EM controller 108 operates as a motor controller. In another example, when operating as the electric generator, each EM controller 108 and its controller circuitry 122 are configured to regulate a flow of electricity from the respective electric machine 106 to the aircraft electrical system 104. This electricity flow regulation may include: (a) turning-on the flow of electricity from the respective electric machine 106 to the aircraft electrical system 104 (e.g., electrically coupling the respective electric machine 106 to the aircraft electrical system 104); (b) turning-off the flow of electricity from the respective electric machine 106 to the aircraft electrical system 104 (e.g., electrically decoupling the respective electric machine 106 from the aircraft electrical system 104); (c) moderating the flow of electricity from the respective electric machine 106 to the aircraft electrical system 104. Here, the EM controller 108 operates as a generator controller.

The electric accessory system 102 includes one or more electric devices 130. The electric devices 130 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 130 of FIG. 2 may be configured as part of one or more sub-systems for the aircraft propulsion system 22 and its turbine engine 24. Examples of these sub-systems include, but are not limited to: a fuel system for delivering the fuel to the fuel injectors 100 (see FIG. 1); a lubrication system for delivering lubricant (e.g., oil) to one or more lubricated components (e.g., bearing(s), gear system(s), seal system(s), etc.) of the aircraft propulsion system 22 and its turbine engine 24; a cooling system for delivering coolant (e.g., liquid coolant, air, etc.) to one or more fluid cooled components of the aircraft propulsion system 22 and its turbine engine 24; and an actuation system for moving one or more adjustable components (e.g., variable guide vanes, a variable area nozzle, etc.) of the aircraft propulsion system 22 and its turbine engine 24. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present invention, however, is not limited to the foregoing exemplary electric devices or sub-systems which may include those electric devices.

Each electric device 130 is electrically coupled to the electrical distribution bus 126 of the aircraft electrical system 104 through one or more electric cables 132 (collectively schematically shown); e.g., high voltage electric cables, low voltage electric cables, power feeder cables, etc. Each electric device 130 may thereby receive a current of electricity from the aircraft electrical system 104 to power operation thereof.

The aircraft electrical system 104 includes the electrical distribution bus 126. This aircraft electrical system 104 may also include a power source 134 and/or a power storage 136. The electrical distribution bus 126 is electrically coupled to each electric machine 106 through the respective EM controller 108. The electrical distribution bus 126 is electrically coupled to each of the electric devices 130. The electrical distribution bus 126 is also electrically coupled to the power source 134 and the power storage 136, respectively schematically shown via lines 138 and 140. With this arrangement, the electrical distribution bus 126 provides an intermediate connection between the various electrical aircraft propulsion system members 106A (via 108A), 106B (via 108B), 130, 134 and/or 136. The power source 134 may be an electric generator powered by the turbine engine 24 or an electric generator powered by another aircraft powerplant; e.g., an engine of a companion aircraft propulsion system, an engine of an auxiliary power unit (APU), a fuel cell system, etc. The power storage 136 is configured to receive electricity from the electrical distribution bus 126 for storage. The power storage 136 is also configured to provide the stored electricity to the electrical distribution bus 126. The power storage 136, for example, may be configured as or otherwise include one or more electricity storage devices; e.g., batteries, super capacitors, etc. With the foregoing aircraft electrical system arrangement, the electrical current provided to one, some or all of the electric devices 130 may be received, through the electrical distribution bus 126, from any one, some or all of the electrical aircraft propulsion system members 106A, 106B, 134 and/or 136. It is also contemplated the electrical current provided to one of the electric machines 106 may be received from another one of the electric machines 106 through the aircraft electrical system 104 and its electrical distribution bus 126.

Referring to FIG. 3, the cooling system 36 is configured to cool one or more electric devices such as the EM controllers 108. The cooling system 36 of FIG. 3, for example, includes an air source 142, an air sink 144 and an air circuit 146.

The air source 142 is configured to provide pressurized air (e.g., compressed air, forced induction air, etc.) to the air circuit 146. For ease of description, the air source 142 is described below as the core flowpath 52 (see also FIG. 1). The present invention, however, is not limited to such an exemplary air source. For example, the air source 142 may alternatively be another flowpath within the aircraft propulsion system 22 and its turbine engine 24 such as the bypass flowpath 54 (see also FIG. 1). In another example, the air source 142 may be disposed external to the aircraft propulsion system 22. The air source 142, for example, may be the external environment 92 (see also FIG. 1).

The air sink 144 is configured to receive the pressurized air from the air circuit 146, following the cooling of the EM controllers 108 using the pressurized air. For ease of description, the air sink 144 is described below as a compartment in which the EM controllers 108 are located. The EM controllers 108 of FIG. 2, for example, may be disposed within the outer housing compartment 90, and the air sink 144 of FIG. 3 may be the outer housing compartment 90. The present invention, however, is not limited to such an exemplary arrangement. For example, the air sink 144 may alternatively be a compartment in which the electric machines 106 (see FIG. 2) are located. The electric machines 106 of FIG. 2, for example, may be disposed within the inner housing compartment 84, and the air sink 144 of FIG. 3 may be the inner housing compartment 84. In another example, the air sink 144 may be another volume (e.g., compartment, passage, flowpath, etc.) within the aircraft propulsion system 22 or even still another volume external to the aircraft propulsion system 22.

The air circuit 146 of FIG. 3 includes a flow regulator 148, an air cooler heat exchanger 150, a fluid separator 152, an air filter 154 and one or more electronics cooler heat exchangers 156A and 156B (generally referred to as "156"). This air circuit 146 also includes a circuit path 158 extending longitudinally through the flow regulator 148, the air cooler heat exchanger 150, the fluid separator 152, the air filter 154 and the electronics cooler heat exchangers 156 from an airflow inlet 160 into the air circuit 146 and its circuit path 158 to an airflow outlet 162 from the air circuit 146 and its circuit path 158. More particularly, the circuit path 158 of FIG. 3 includes a supply leg 164 and one or more cooling legs 166A and 166B (generally referred to as "166"). The supply leg 164 of FIG. 3 extends sequentially from the circuit inlet 160, through the flow regulator 148, the air cooler heat exchanger 150, the fluid separator 152 and the air filter 154, to inlets into the cooling legs 166. Each cooling leg 166A, 166B extends from the supply leg 164, through a respective one of the electronics cooler heat exchanger 156A, 156B, to the circuit outlet 162. The cooling legs 166 of FIG. 3 are thereby fluidly coupled in parallel between the supply leg 164 and the circuit outlet 162. The present invention, however, is not limited to such an exemplary arrangement. It is contemplated, for example, the air circuit components 148, 150, 152 and/or 154 may be disposed in other arrangements inline along the circuit path 158. Moreover, it is contemplated the air circuit 146 may (or may not) include one or more other components arranged along the circuit path 158; e.g., additional filter(s), additional heat exchanger(s), additional flow regulator(s), sensor device(s), etc.

The circuit inlet 160 fluidly couples the air source 142 to the circuit path 158 and its supply leg 164. For example, where the air source 142 is the core flowpath 52 of FIG. 1, the circuit inlet 160 may be disposed along the core flowpath 52 upstream of the combustor section 46 and its combustor 98. More particularly, the circuit inlet 160 may be disposed along the core flowpath 52 in the compressor section 45. The circuit inlet 160 of FIG. 1, for example, is disposed along the core flowpath 52 in the HPC section 45B. This circuit inlet 160 may be disposed along an upstream half (1/2), third (1/3) or quarter (1/4) of the HPC rotor 66. The circuit inlet 160 of FIG. 1, for example, is disposed at (or about) an upstream end 167 of the HPC rotor 66. The circuit inlet 160 may be configured as or otherwise include a bleed port (or multiple bleed ports) and/or a scoop (or multiple scoops) in and/or along a radial outer peripheral boundary of the core flowpath 52 longitudinally overlapping the HPC rotor 66. The present invention, however, is not limited to such an exemplary arrangement. For example, the circuit inlet 160 may be disposed longitudinally along the core flowpath 52 between (a) the LPC section 45A and/or its LPC rotor 65 and (b) the HPC section 45B and/or its HPC rotor 66. In another example, the circuit inlet 160 may be disposed longitudinally along the core flowpath 52 in the LPC section 45A.

Referring to FIG. 3, the circuit outlet 162 fluidly couples the circuit path 158 and its cooling legs 166 to the air sink 144. For example, where the air sink 144 is the outer housing compartment 90, the circuit outlet 162 may be disposed in or along a peripheral border of the outer housing compartment 90.

The flow regulator 148 may be configured to regulate a flow of the pressurized air out of the air source 142 and into the air circuit 146 and its supply leg 164. The flow regulator 148 may also or alternatively be configured to regulate the flow of the pressurized air within the air circuit 146 and its supply leg 164 to one or more of the cooling legs 166. The flow regulator 148, for example, may be configured as or otherwise includes a flow diverter, a control valve or a valve system. During a first mode of operation, the flow regulator 148 may open and fluidly couple a section 168A of the supply leg 164 upstream of the flow regulator 148 to a section 168B of the supply leg 164 downstream of the flow regulator 148. During a second mode of operation, the flow regulator 148 may close and fluidly decouple the upstream section 168A of the supply leg 164 from the downstream section 168B of the supply leg 164 (or facilitate a minimum flow of the pressurized air from the upstream section 168A of the supply leg 164 and the downstream section 168B of the supply leg 164). Of course, it is also contemplated the flow regulator 148 may operate in a third mode of operation where the flow regulator 148 partially opens (or partially closes) to facilitate a metered flow of the pressurized air from the upstream section 168A of the supply leg 164 and the downstream section 168B of the supply leg 164.

The air cooler heat exchanger 150 includes one or more internal air circuit passages 170 and one or more internal fluid circuit passages 172. Each of these circuit passages 170, 172 is formed by the air cooler heat exchanger 150. The air circuit passages 170 collectively form a longitudinal section of the circuit path 158 and its supply leg 164. The fluid circuit passages 172 collectively form at least a longitudinal section of a working fluid circuit 174. These fluid circuit passages 172 are fluidly independent from the air circuit passages 170. The air circuit passages 170 and the fluid circuit passages 172 may be arranged to configure the air cooler heat exchanger 150 as a crossflow heat exchanger, a counterflow heat exchanger, a parallel flow heat exchanger, or a hybrid heat exchanger with a combination crossflow, counterflow and/or parallel flow arrangement. Briefly, the working fluid circuit 174 may be another air circuit which receives its working fluid (e.g., bleed air bled) from the bypass flowpath 54 (see FIG. 1) or another pressurized air source. In such embodiments, the air cooler heat exchanger 150 is configured as an air-to-air heat exchanger. Alternatively, the working fluid circuit 174 may be part of a liquid working fluid system 176 for the aircraft propulsion system 22 and its turbine engine 24. For example, the working fluid system 176 may be part of a lubrication system and the working fluid may be lubricant. In another example, the working fluid system 176 may be part of a fuel system delivering fuel to the fuel injectors 100 (see FIG. 1) and the working fluid may be the fuel. In such embodiments, the air cooler heat exchanger 150 is configured as a liquid-to-air heat exchanger.

The fluid separator 152 may be a water separator. The fluid separator 152, for example, may be configured to extract water (e.g., liquid water, water vapor, etc.) from the pressurized air flowing through the circuit path 158 and its supply leg 164. The extracted water may then be directed out of the air circuit 146 (e.g., into the bypass flowpath 54 or the external environment 92), while the remaining pressurized air may continue to flow downstream within the circuit path 158 and its supply leg 164.

The air filter 154 is configured to remove debris from the pressurized air. The air filter 154 may be configured as or otherwise include a charcoal filter and/or another type of (e.g., last chance) air filter.

Each electronics cooler heat exchanger 156 is arranged in thermal communication with the respective power electronics (e.g., the electrical circuitry 122) to be serviced; e.g., cooled. Each electronics cooler heat exchanger 156 of FIG. 3, for example, may be configured as a cooling plate to which the electrical circuitry 122 of the respective EM controller 108 may be mounted. More particularly, each electronics cooler heat exchanger 156 may be configured as a mass of thermally conductive material such as metal with one or more internal air circuit passages 178A, 178B (generally referred to as "178"; one schematically shown in FIG. 3). These air circuit passages 178 collectively form a longitudinal section of the respective cooling leg 166 through the respective electronics cooler heat exchanger 156. Each electronics cooler heat exchanger 156 of FIG. 3 is disposed within the interior of the respective controller housing 120, where a sidewall 180A, 180B (generally referred to as "180") of each controller housing 120A, 120B forms a peripheral boundary of the respective EM controller housing interior. Each electronics cooler heat exchanger 156 may be formed integral with, attached to and/or otherwise connected to the respective housing sidewall 180. With this arrangement, each electronics cooler heat exchanger 156 of FIG. 3 is disposed between and engages (e.g., contacts) (a) the respective electrical circuitry 122 and (b) the respective housing sidewall 180. The present invention, however, is not limited to such an exemplary arrangement. For example, each electronics cooler heat exchanger 156 may form the respective housing sidewall 180 such that the respective electronics cooler heat exchanger 156 forms a peripheral boundary of the respective EM controller housing interior. In other example, each electronics cooler heat exchanger 156 may be mounted external to the respective controller housing 120.

During operation of the air system 36 of FIG. 3, the circuit inlet 160 bleeds or otherwise receives pressurized air from the air source 142 and directs that pressurized air into the circuit path 158 and its supply leg 164. The flow of the pressurized air is regulated by the flow regulator 148 and directed into the air circuit passages 170 of the air cooler heat exchanger 150. Simultaneously, the working fluid circuit 174 directs a flow of the working fluid (e.g., air, lubricant, fuel, etc.) into the fluid circuit passages 172 of the air cooler heat exchanger 150. Under normal operating conditions during operation of the aircraft propulsion system 22, the air cooler heat exchanger 150 may transfer heat energy out of the pressurized air and into the working fluid. The air cooler heat exchanger 150 may thereby cool the pressurized air, while heating the working fluid. This cooled pressurized air is directed through the fluid separator 152 to extract water from the pressurized air. The cooled pressurized air is also directed through the air filter 154 to remove debris from the pressurized air. The cooled pressurized air is subsequently directed into each of the electronics cooler heat exchangers 156. Within each electronics cooler heat exchanger 156, heat energy generated by the respective EM controller 108 and its electrical circuitry 122 may transfer through the electronics cooler heat exchanger 156 into the pressurized air. Each electronics cooler heat exchanger 156 may thereby cool the respective EM controller 108 and its electrical circuitry 122, while heating the pressurized air. The heated pressurized air may subsequently be exhausted into the air sink 144 through the circuit outlet 162. Where the air sink 144 is an internal compartment within the aircraft propulsion system 22 (e.g., the outer housing compartment 90 or the inner housing compartment 84), the pressurized air may be used to ventilate that respective compartment and/or convectively cool one or more other aircraft powerplant components disposed in that same compartment.

In some embodiments, referring to FIG. 3, the air circuit 146 and its circuit path 158 may be configured as an open loop. In other embodiments, referring to FIG. 4, the air circuit 146 and its circuit path 158 may be configured as a closed loop. With such a closed loop circuit arrangement, the air circuit 146 of FIG. 4 may omit the flow regulator 148, the fluid separator 152 and/or the air filter 154 of FIG. 3. However, the air circuit 146 of FIG. 4 includes a compressor 182 (e.g., an electric compressor or a mechanical compressor) fluidly coupled inline along the circuit path 158 between the air cooler heat exchanger 150 and the electronics cooler heat exchangers 156. This compressor 182 is configured to compress the air within the air circuit 146 and its circuit path 158 and thereby facilitate circulation of the pressurized air through the circuit path 158. Here, the compressor 182 is disposed downstream of the air cooler heat exchanger 150 and upstream of the electronics cooler heat exchangers 156. It is contemplated, however, the compressor 182 may alternatively be disposed upstream of the air cooler heat exchanger 150 and downstream of the electronics cooler heat exchangers 156.

In some embodiments, the air cooler heat exchanger 150 may be configured as an air-to-air heat exchanger where the working fluid circuit 174 is configured as another air circuit. In such embodiments, the working fluid circuit 174 may receive its working fluid (pressurized air) from an air source such as the bypass flowpath 54. The working fluid circuit 174 may then exhaust its working fluid (pressurized air), following the heat transfer within the air cooler heat exchanger 150, into an air sink such as one of the internal compartments 84 or 90 (see also FIG. 1) within the aircraft propulsion system 22. Of course, it is contemplated the working fluid (pressurized air) may be sourced from another air source and/or exhausted to another air sink.

In some embodiments, the air cooler heat exchanger 150 may be configured as a liquid-to-air (e.g., fuel-to-air) heat exchanger where the working fluid circuit 174 is configured as a fuel circuit. In such embodiments, the working fluid circuit 174 may receive its working fluid (fuel) from a working fluid reservoir 184 such as a fuel tank. The working fluid circuit 174 may then deliver its working fluid (fuel), following the heat transfer within the air cooler heat exchanger 150, to the fuel injectors 100 (see also FIG. 1).

In some embodiments, referring to FIGS. 3 and 4, the air circuit 146 is configured to service (e.g., cool) multiple of the EM controllers 108. In other embodiments, it is contemplated each EM controller 108 may be configured with its own dedicated air circuit 146.

While various embodiments of the present invention have been described, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft powerplant, comprising:
a first electric machine configurable as a first electric motor and/or a first electric generator;
a first controller configured to control operation of the first electric machine, the first controller comprising first electrical circuitry; and
an air circuit extending through the first controller, the air circuit configured to cool the first electrical circuitry using pressurized air.

2. The assembly of claim 1, further comprising a turbine engine, the first electric machine operatively coupled to the turbine engine.

3. The assembly of claim 1 or 2, further comprising a rotating structure comprising a bladed rotor, the first electric machine operatively coupled to the rotating structure.

4. The assembly of any of claims 1 to 3, wherein:
the first controller further comprises a first controller housing;
the first electrical circuitry is disposed in an interior of the first controller housing; and
the air circuit extends through the interior of the first controller housing.

5. The assembly of any of claims 1 to 3, wherein:
the first controller further comprises a first controller housing;
the air circuit comprises a heat exchanger disposed in an interior of the first controller housing; and
the first electrical circuitry is disposed in the interior of the first controller housing and in thermal communication with the heat exchanger.

6. The assembly of any preceding claim, further comprising a second controller comprising second electrical circuitry, the air circuit further extending through the second controller, and the air circuit further configured to cool the second electrical circuitry using the pressurized air.

7. The assembly of any preceding claim, further comprising:
a compressor section;
a combustor section;
a turbine section; and
a flowpath extending through the compressor section, the combustor section and the turbine section, the air circuit configured to receive the pressurized air from the flowpath.

8. The assembly of any of claims 1 to 6, further comprising:
a compressor section;
a combustor section;
a turbine section; and
a flowpath bypassing at least one of the compressor section, the combustor section or the turbine section, the air circuit configured to receive the pressurized air from the flowpath.

9. The assembly of any preceding claim, further comprising a housing structure comprising an internal compartment, the first controller disposed within the internal compartment, and an airflow outlet from the air circuit fluidly coupled to the internal compartment.

10. The assembly of any of claims 1 to 6, further comprising a housing structure comprising an internal compartment, the first electric machine disposed within the internal compartment, and an airflow outlet from the air circuit fluidly coupled to the internal compartment.

11. The assembly of any preceding claim, wherein the air circuit comprises a flow regulator upstream of the first controller.

12. The assembly of any preceding claim, wherein the air circuit comprises a fluid separator and/or a filter upstream of the first controller.

13. The assembly of any preceding claim, further comprising a heat exchanger, the air circuit extending through heat exchanger upstream of the first controller; and optionally:
a second air circuit extending through the heat exchanger, the heat exchanger configured to transfer heat energy from the pressurized air flowing within the air circuit into second pressurized air flowing through the second air circuit; and/or
a liquid working fluid circuit extending through the heat exchanger, the heat exchanger configured to transfer heat energy from the pressurized air flowing within the air circuit into a liquid working fluid flowing through the liquid working fluid circuit.

14. The assembly of any preceding claim, wherein the air circuit comprises a compressor upstream of the first controller.

15. The assembly of any preceding claim, wherein the air circuit is a closed loop circuit.
